# EUROPEAN PATENT APPLICATION

(11) **EP 4 637 099 A1**
(43) Date of publication of application: **22.10.2025**
(21) Application number: 25166252.4
(22) Date of filing: 26.03.2025
(51) Int. Cl.: H04L 41/082, H04L 67/00, H04W 12/30, H04L 9/40, H04L 67/12, H04L 67/30, H04W 8/18, H04W 4/50

(54) **WIRELESS INSTALLATION OF PHYSICAL SIM AND ESIM PROFILES ON AIRPLANE SYSTEMS**

(30) Priority: 05.04.2024 US 202463575069 P; 18.02.2025 US 202519056215
(71) Applicant: The Boeing Company, Arlington, VA 22202 (US)
(72) Inventor: CORNELL, Matthew S., ARLINGTON, 22202 (US); ELLIS, Daniel John, ARLINGTON, 22202 (US)
(74) Representative: Plasseraud IP

(57) **Abstract**

A communications configuration system comprising a computer system (212) and a configuration manager (214) in the computer system (212). The configuration manager (214) is configured to identify a profile (220) for a communications network (207) that provides a communications service (221). The configuration manager (214) is configured to create a user modifiable software part (223, 404) for the communications network (207) using the profile (220), wherein the user modifiable software part (223, 404) is for a communications gateway (102, 204) in an aircraft (206) that manages communications. The configuration manager (214) is configured to send the user modifiable software part (223, 404) to an aircraft network (151, 224) in the aircraft (206). The user modifiable software part (223, 404) is used to configure the communications gateway (102, 204).

## Description

### FIELD

The present disclosure relates generally to aircraft and in particular, to subscriber identifier module profiles used on aircraft.

### BACKGROUND

In the connected aircraft, airlines are increasingly leveraging real-time aircraft system data and real-time weather data to efficiently operate their fleets with applications on portable electronic flight bags (EFB). Electronic flight bags can take the form of tablet computers. Onboard connections can be provided to these devices by an aircraft interface device (AID). The aircraft interface device uses an offboard cellular connection to send data off board. With these connections, the aircraft interface device provides high-speed, high-bandwidth data communication between the computing devices on the aircraft with cellular and internet services.

### SUMMARY

An embodiment of the present disclosure provides a communications configuration system defined in claim 1. Other embodiments of the communications configuration system can be defined according to the appended claims 2 to 14.

Another embodiment of the present disclosure provides a method for configuring a communications gateway defined in claim 15.

Yet another embodiment of the present disclosure which is not claimed provides an example computer program product for configuring a communications gateway. The computer program product comprises a set of one or more computer-readable storage media and program instructions, collectively stored in the set of one or more storage media, for causing a processor set to perform the following computer operations program instructions, collectively stored in the set of one or more storage media, for causing a processor set to perform the following computer operations: identifying a profile for a communications network that provides a communications service; creating a user modifiable software part using the profile, wherein the user modifiable software part is for the communications gateway in an aircraft that manages communications with the aircraft; and sending the user modifiable software part to an aircraft network in the aircraft, wherein the user modifiable software part is used to configure the communications gateway.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an example pictorial representation of a commercial airplane in which illustrative embodiments can be implemented;
**Figure 2** is an example illustration of a block diagram of a communications environment in accordance with an illustrative embodiment;
**Figure 3** is an example illustration of a block diagram of a profile in accordance with an illustrative embodiment;
**Figure 4** is an example illustration of a dataflow diagram for configuring an aircraft using a profile located on a physical subscriber identity module (SIM) card in accordance with an illustrative embodiment;
**Figure 5** is an example illustration of a flowchart of a process for configuring a communications gateway in accordance with an illustrative embodiment;
**Figure 6** is an example illustration of a flowchart of a process for configuring a communications gateway in an aircraft in accordance with an illustrative embodiment;
**Figure 7** is an example illustration of a flowchart of a process for configuring a communications gateway in an aircraft in accordance with an illustrative embodiment;
**Figure 8** is an example illustration of a flowchart of a process for identifying a profile in accordance with an illustrative embodiment;
**Figure 9** is an example illustration of a flowchart of a process for identifying a profile in accordance with an illustrative embodiment;
**Figure 10** is an example illustration of a flowchart of a process for sending a user modifiable software part in accordance with an illustrative embodiment;
**Figure 11** is an example illustration of a flowchart of a process for verifying a user modifiable software part in accordance with an illustrative environment; and
**Figure 12** is an example illustration of a block diagram of a data processing system in accordance with an illustrative embodiment.

### DETAILED DESCRIPTION

The illustrative embodiments recognize and take into account one or more different considerations as described herein. Currently, an aircraft interface device uses a physical subscriber identity module (SIM) card to provide connectivity to communications networks. The SIM card contains a profile used to connect to a communications network such as a mobile communications network that provides cellular service. The service can be changed by changing the profile. Currently, this change is performed by removing and installing a new physical SIM card. This change can be made to provide different services or other features with respect to , for example, the cellular service or any other communications services. However, the aircraft interface device is not readily accessible from the cabin or cockpit of the aircraft. As a result, the time and effort needed to make changes to the aircraft interface device is more difficult than desired.

In one illustrative example, a communications configuration system comprises a computer system and a configuration manager in the computer system. The configuration manager is configured to identify a profile for a communications network that provides a communications service. The communications network may comprise but is not limited to, for example, a mobile network, a cellular network, a ground base network using very high frequency (VHF) signals, a satellite communications network, or other network for providing wireless communications with aircraft. The communications service may comprise but is not limited to, for example, a cellular service or other service for providing wireless communications with aircraft.

The configuration manager is configured to create a user modifiable software part for the communications network using the profile, wherein the user modifiable software part is for a communications gateway in an aircraft that manages communications with the aircraft. The configuration manager is configured to send the user modifiable software part to an aircraft network in the aircraft. The user modifiable software part is used to configure the communications gateway.

In another illustrative example, a cellular communication configuration system comprises a computer system and a configuration manager in the computer system. The configuration manager is configured to identify a profile for a mobile network that provides a cellular service. A mobile network is a type of communications network that enables mobile devices to connect to the internet, make calls, send messages, and use other services.

The configuration manager is configured to create a user modifiable software part for the mobile network using the profile, wherein the user modifiable software part is for a communications gateway in an aircraft that manages cellular communications. The configuration manager is configured to send the user modifiable software part to an aircraft network in the aircraft. The user modifiable software part is used to configure the communications gateway.

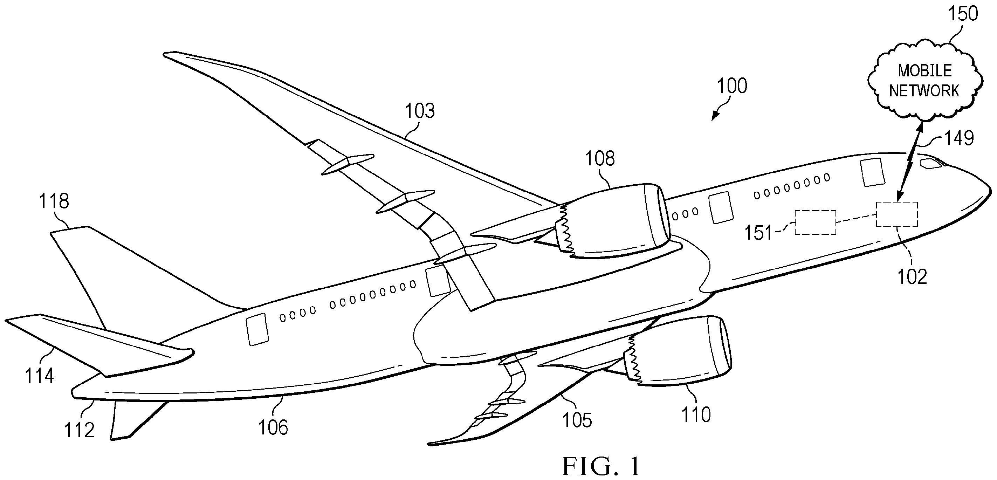

With reference now to the figures and, in particular, with reference to **Figure 1****,** an example pictorial representation of a commercial airplane is depicted in which illustrative embodiments can be implemented. In this illustrative example, aircraft **100** has wing **103** and wing **105** attached to body **106.** Commercial airplane **100** includes engine **108** attached to wing **103** and engine **110** attached to wing **105.**

Body **106** has tail section **112.** Horizontal stabilizer **114** and vertical stabilizer **118** are attached to tail section **112** of body **106.** Another horizontal stabilizer is present but not seen in this view.

Commercial airplane **100** is an example of an aircraft in which communications gateway **102** can be implemented in accordance with an illustrative embodiment. In this illustrative example, communications gateway **102** is a device that manages a number of wireless connections **149** for commercial airplane **100.** The management of wireless connections can include establishing a wireless connection, managing use of the wireless connection, and terminating the wireless connection. In this illustrative example, these wireless connections are to mobile networks **150** (or a cellular network, a ground base network using very high frequency (VHF) signals, a satellite communications network, etc.).

In this example, communications gateway **102** is an aircraft interface device (AID) that can provide cellular service to commercial airplane **100.** For example, communications gateway **102** can set up and manage wireless connections **149** to mobile network **150** in the form of a cellular mobile network to provide cellular service. Mobile network **150** can also include satellite services.

In these illustrative examples, communications gateway **102** can be configured using a user modifiable software (USP) part. This part can be created and uploaded wirelessly to an aircraft network **151** in commercial airplane **100.** This aircraft network includes computers that can process a user modifiable software part and install this part in communications gateway **102.** The aircraft network can be, for example, an onboard network system, a core network, an inflight entertainment network, a connected cargo network, or other suitable type of network or system that provides computing processes on commercial airplane **100.** In these examples, the user modifiable software part has a design assurance level that is DAL E which does not require a human operator to be present on the aircraft to upload and install the user modifiable software (USP) part. DALE E is an assurance level in Design Assurance Level, developed by the Radio Technical Commission for Aeronautics (RTCA), in collaboration with the European Organization for Civil Aviation Equipment (EUROCAE), as part of standards for ensuring the safety of airborne systems and equipment.

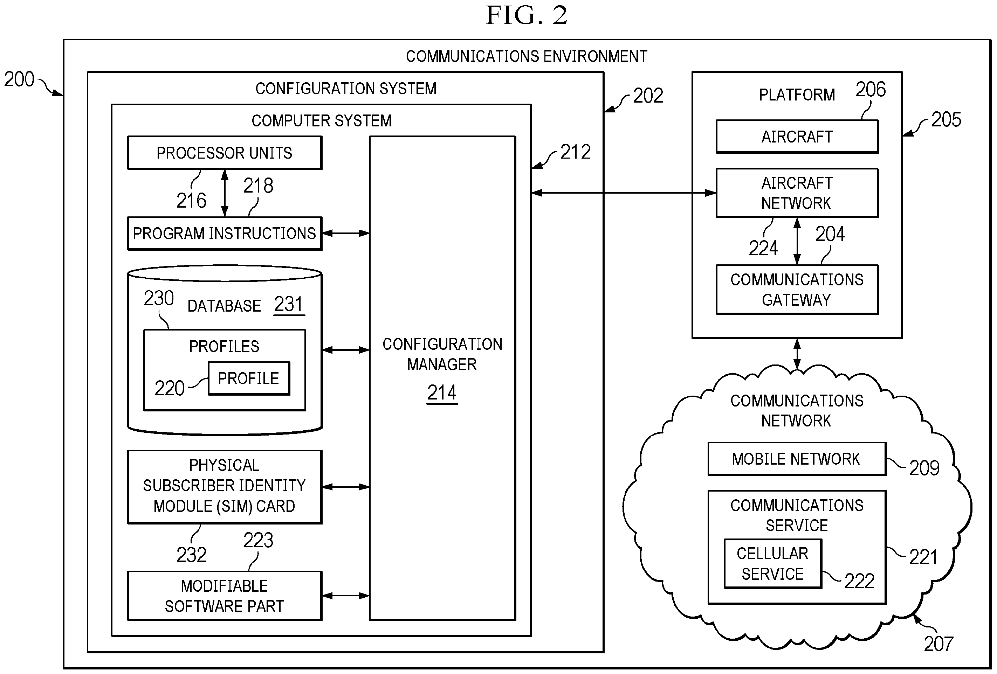

With reference now to **Figure 2****,** an example illustration of a block diagram of a communications environment is depicted in accordance with an illustrative embodiment. Communications environment **200** is an environment in which configuration system **202** operates to configure communications gateway **204** in platform **205.**

In this example, platform **205** is selected from a group comprising a mobile platform, a stationary platform, a land-based structure, an aquatic-based structure, a space-based structure, an aircraft, a surface ship, a tank, a personnel carrier, a train, a spacecraft, a space station, a satellite, a high altitude platform system (HAPS), a submarine, an automobile, a power plant, a bridge, a dam, a house, a manufacturing facility, and a building.

When platform **205** is aircraft **206,** aircraft **206** can take a number of different forms. For example, aircraft **206** can be selected from a group comprising a commercial airplane, a cargo airplane, a rotor aircraft, a tilt wing aircraft, a vertical takeoff and landing aircraft, a rotorcraft, an unmanned aerial vehicle (UAV), a drone, an artificial intelligence (AI) controlled drone, an electric vertical takeoff and landing vehicle, a personal air vehicle, a glider, and other types of aircraft that can fly in the atmosphere. Commercial airplane **100** in **Figure 1** is an example of an implementation for aircraft **206.**

In this illustrative example, communications gateway **204** is a hardware system that can also include software. For example, communications gateway **204** can be selected from a group comprising an aircraft interface device, a cellular modem, a satellite modem, an inflight entertainment server, and other suitable types of components.

Communications gateway **204** provides an interface between different communication systems in aircraft **206** and communications network **207.** For example, communications gateway **204** manages communications with aircraft **206** such as communications between aircraft **206** and communications network **207.**

In this example, communications network **207** can be at least one of a mobile network, a cellular network, a ground base network using very high frequency (VHF) signals, a satellite communications network, or other network for providing wireless communications with aircraft **206.**

The phrase "at least one of," when used with a list of items, means different combinations of one or more of the listed items can be used, and only one of each item in the list may be needed. In other words, "at least one of" means any combination of items and a number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combination of these items can be present. In some illustrative examples, "at least one of" can be, for example, without limitation, two of item A; one of item B; and ten of item C; four of item B and seven of item C; or other suitable combinations.

Communications gateway **204** can be selected from a group comprising an aircraft interface device (AID), a cellular modem, a satellite modem, an inflight entertainment server, or other suitable type of gateway that can provide communications connections with communications network **207.**

As depicted, configuration system **202** operates to manage the configuration of communications gateway **204.** Configuration system **202** can configure communications gateway **204** to communicate with one or more networks in communications network **207.** For example, configuration system **202** can configure communications gateway **204** to establish communications connections with mobile network **209.** In this example, mobile network **209** can be selected from a group comprising a 5G network, a Long-Term Evolution (LTE) network, a Universal Mobile Telecommunications System (UTMS) network, a Global System for Mobile Communications (GSM) network, and other suitable types of mobile networks. Further, the configuration can also include finding or enabling services accessed in mobile network **209.** In some examples, configuration system **202** can configure communications gateway **204** to establish communications connections with the satellite communications network. In some examples, configuration system **202** can configure communications gateway **204** to establish communications connections with the mobile network **209** and the satellite communications network.

In this illustrative example, configuration system **202** comprises computer system **212** and configuration manager **214.** Configuration manager **214** is located in computer system **212.**

Configuration manager **214** can be implemented in software, hardware, firmware or a combination thereof. When software is used, the operations performed by configuration manager **214** can be implemented in program instructions configured to run on hardware, such as a processor unit. When firmware is used, the operations performed by configuration manager **214** can be implemented in program instructions and data and stored in persistent memory to run on a processor unit. When hardware is employed, the hardware can include circuits that operate to perform the operations in configuration manager **214.**

In the illustrative examples, the hardware can take a form selected from at least one of a circuit system, an integrated circuit, an application-specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field-programmable logic array, a field-programmable gate array, and other suitable hardware devices. Additionally, the processes can be implemented in organic components integrated with inorganic components and can be comprised entirely of organic components excluding a human being. For example, the processes can be implemented as circuits in organic semiconductors.

As used herein, "a number of" when used with reference to items, means one or more items. For example, "a number of operations" is one or more operations.

Computer system **212** is a physical hardware system and includes one or more data processing systems. For example, the computer system **212** may be selected from a laptop computer, an electronic flight bag, a tablet computer, or a mobile phone. When more than one data processing system is present in computer system **212,** those data processing systems are in communication with each other using a communications medium. The communications medium can be a network. The data processing systems can be selected from at least one of a computer, a server computer, a tablet computer, or some other suitable data processing system.

As depicted, computer system **212** includes a number of processor units **216** that are capable of executing program instructions **218** implementing processes in the illustrative examples. In other words, program instructions **218** are computer-readable program instructions.

As used herein, a processor unit in the number of processor units **216** is a hardware device and is comprised of hardware circuits such as those on an integrated circuit that respond to and process instructions and program code that operate a computer.

When the number of processor units **216** executes program instructions **218** for a process, the number of processor units **216** can be one or more processor units that are in the same computer or in different computers. In other words, the process can be distributed between processor units **216** on the same or different computers in computer system **212.**

Further, the number of processor units **216** can be of the same type or different types of processor units. For example, the number of processor units **216** can be selected from at least one of a single core processor, a dual-core processor, a multi-processor core, a general-purpose central processing unit (CPU), a graphics processing unit (GPU), a digital signal processor (DSP), or some other type of processor unit.

In this illustrative example, configuration manager **214** performs a number of different operations to configure communications gateway **204.** For example, configuration manager **214** identifies profile **220** for communications network **207** that provides communications service **221.** Profile **220** can be identified from a block of profiles **230** in database **231.** That is, the configuration manager **214** may be configured to locate the profile **220** from the block of profiles **230** in the database **231.** Connections to mobile network **209** can be set up and managed using one or more of profiles **230** that identify and provide information needed to connect to the communications network.

In this example, communications network **207** comprises or includes mobile network **209,** and communications service **221** can be cellular service **222.** With this example, configuration system **202** can be a cellular communications configuration system when used to configure communications gateway **204** to do cellular service **222** provided by mobile network **209.**
Another example, profile **220** can be downloaded from another source such as a physical subscriber identity module (SIM) card **232.** According to another example, the configuration manager **214** may be configured to download the profile **220** from the physical subscriber identity module (SIM) card **232.**

Configuration manager **214** creates user modifiable software part **223** for communications network **207** using profile **220.** In this example, user modifiable software part **223** is for communications gateway **204** in aircraft **206** that manages communications with aircraft **206.** Configuration manager **214** sends user modifiable software part **223** to aircraft network **224** in aircraft **206.** User modifiable software part **223** is used to configure communications gateway **204** in aircraft **206.**

For example, user modifiable software part **223** can be securely sent to aircraft network **224** using an encrypted storage device. This secured storage device can be, for example, a universal serial bus (USB) drive or a secure digital card. Access points for these types of storage systems are more easily accessible as compared to replacing a physical subscriber identity module (SIM) card in the communications gateway **204.**

For example, access to aircraft network **224** for these types of storage devices can be found in areas in aircraft **206** such as an avionics bag mount, the cockpit, maintenance panels, and in other locations that are accessible for maintenance.

In another example, user modifiable software part **223** can be sent (via the configuration manager **214)** to aircraft network **224** over a wireless connection to aircraft network **224.** For example, a secured wireless connection can be used. A secured wireless connection can be provided through an electronic distribution system (EDS) for aircraft **206** in aircraft network **224.** For example, user modifiable software part **223** can be sent over a wireless connection to aircraft **206** from a mobile computing device. In this example, configuration manager **214** can be located in the mobile computing device in computer system **212.**

In this example, this loading of user modifiable software part **223** can occur using an aircraft data load network or other device that facilitates the verification and transfer of software parts to the appropriate component in aircraft **206.** In this example, aircraft network **224** verifies authenticity and software integrity of user modifiable software part **223.** This network sends user modifiable software part **223** to communications gateway **204** in response to user modifiable software part **223** being verified.

For example, software can be loaded onto communications gateway **204** by a data loader is compliant to various standards, such as ARINC 615 or ARINC 615A, which are standards developed by Aeronautical Radio, Inc. In this example, modifiable software part **223** has a design assurance level that is DAL E. This level is the lowest level of assurance and has no effect on the operational capability or safety of aircraft **206.** In the illustrative example, this standard is defined by RTCA DO-178C, which is Software Considerations in Airborne Systems and Equipment Certification. This certification is a standard developed by the Radio Technical Commission for Aeronautics (RTCA) and European Organization for Civil Aviation Equipment (EUROCAE).

Thus, communications gateway **204** can be configured and reconfigured through the use of user modifiable software part **223.** As different services, mobile networks, and other changes are needed for communications connections to communications network **207,** new or modifiable software parts can be created and sent to communications gateway **204.** As a result, physical access to communications gateway **204** is unnecessary to make updates to configure communications gateway **204** for different services in communications network **207.**

In one illustrative example, one or more technical solutions are present that overcome a technical problem with establishing and managing connections to communications networks using a communications gateway for any platform such as an aircraft. As a result, one or more technical solutions may provide a technical effect reducing the time and effort needed to configure or reconfigure a communications gateway to connect to and provide services from one or more different networks in a communications network.

In the illustrative example, a communications gateway can be configured to connect to different networks in a communications network without having to physically access the communications gateway to configure the communications gateway. In other words, a human operator does not need to access a communications gateway to perform updates or change a physical subscriber identity module (SIM) card in the communications gateway.

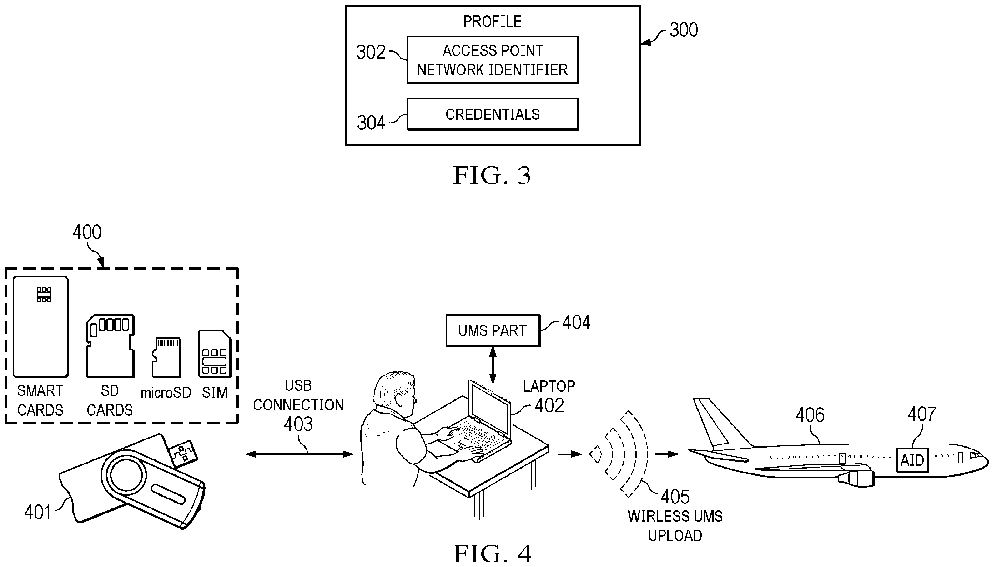

Turning next to **Figure 3****,** an example illustration of a block diagram of a profile is depicted in accordance with an illustrative embodiment. In this example, profile **300** is an example of an implementation for profile **220** and other profiles in profiles **230** in **Figure 2****.**

As depicted, profile **300** comprises different types of information. In this example, profile **300** comprises access point network identifier **302** for a communications network and credentials **304** used to authenticate the communications network.

In this example, access point network identifier **302** is a unique identifier used in wireless networks to specify the gateway that connects devices to external networks, such as the internet or private data networks. Access point network identifier **302** can also include other information such as configuration settings needed for a connection to access specific services provided by the communications network.

Credentials **304** are used to verify the identity of the user and to obtain permission to connect to the communications network. For example, credentials **304** are used to authenticate a mobile network. In this example, credentials **304** can include at least one of a username, a password, a SIM card identifier, a security key, a pre-shared key (PSK), a digital certificate, biometric data, or other suitable information. In response to the authentication, aircraft network **224** can send user modifiable software part **223** to communications gateway **204.**

The illustration of profile **300** is provided as one example and not meant to limit the manner in which profiles can be implemented. For example, profile **300** can also include other information such as configuration settings for services such as messaging, Internet access, quality of service parameters, network type, or other information.

In one illustrative example, profile **300** can be a subscriber identifier module (SIM) profile that comprises configuration data describing how to connect and interact with a mobile network. In this type profile, credentials **304** can include network within patient data such as encryption keys and algorithms to secure communications with the mobile network.

Other information in addition to access point network identifier **302** and credentials **304** can be present in profile **300.** For example, service preference settings can also be included. The settings can include preferred network lists, roaming configurations, service access controls, and other data. This and other information can be present in profile **300** in addition to access point network identifier **302** and credentials **304.**

The illustration of communications environment **200** and the different components in communications environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, one or more platforms in addition to platform **205** can be managed by configuration manager **214** using user modifiable software parts such as, for example, other platforms for which communications can be configured to communicate with communications network **207.** These other platforms can be of the same or different types of platforms from platform **205.** For example, when platform **205** is aircraft **206,** the other platforms can also be aircraft. In other examples, the other platforms can include at least one of buildings, satellites, manufacturing facilities, ships, trains, and other types of platforms.

In another example, user modifiable software part **223** is sent to a network for platform **205** such as a local area network for platform **205** in the form of a building, a controller area network (CAN) for platform **205** in the form of a vehicle, or some other suitable type of network.

With reference to **Figure 4****,** an example illustration of a dataflow diagram for configuring an aircraft using a profile located on a physical subscriber identity module (SIM) card is depicted in accordance with an illustrative embodiment.

As depicted in this example, profiles can be located on physical SIM cards **400.** The profiles on these physical SIM cards can be accessed using universal serial bus (USB) SIM reader **401.** In this example, one of the physical SIM cards can be inserted into USB SIM reader **401** which can be connected to a device such as laptop **402** using USB connection **403.**

With this connection, laptop **402** can access the user profile in a SIM card in SIM cards **400** inserted in USB SIM reader **401.** This access can be performed by laptop **402** sending commands to Application Protocol Data Units (APDUs) in which commands and responses can be exchanged using these data units.

For example, command APDUs can be sent from laptop **402** to a SIM card inserted in USB SIM reader **401** to request specific data or actions. For example, actions can include instructions (select, read binary, verify PIN) and parameters (file identifier, data, PIN). The instructions specify an operation to be performed, while the parameters provide additional information used to perform the action in the instruction. Response APDUs are returned from the SIM card to laptop **402.** The response APDUs can include status words indicating whether the action was a success or failure.

When the user profile is accessed, laptop **402** creates user modifiable software (UMS) part **404.** This software part can be uploaded as part of a wireless user modifiable software (UMS) upload **405** to airplane **406.**

This part is processed and installed on a communications gateway such as an aircraft interface device (AID) **407** in airplane **406.** In this example, AID **407** stores the information in the software part into a nonvolatile memory. The storage of this data can be in a secure container with no other content. In other examples, this data can be stored in a trusted platform module (TPM). When stored in a trusted platform module, this data is stored in a protected chipset.

AID **407** can send this data to a cellular module for use in providing services. In this manner, changes can be made to provide different types of services or improve services as the services are available, become available, or are identified for use by airplane **406.**

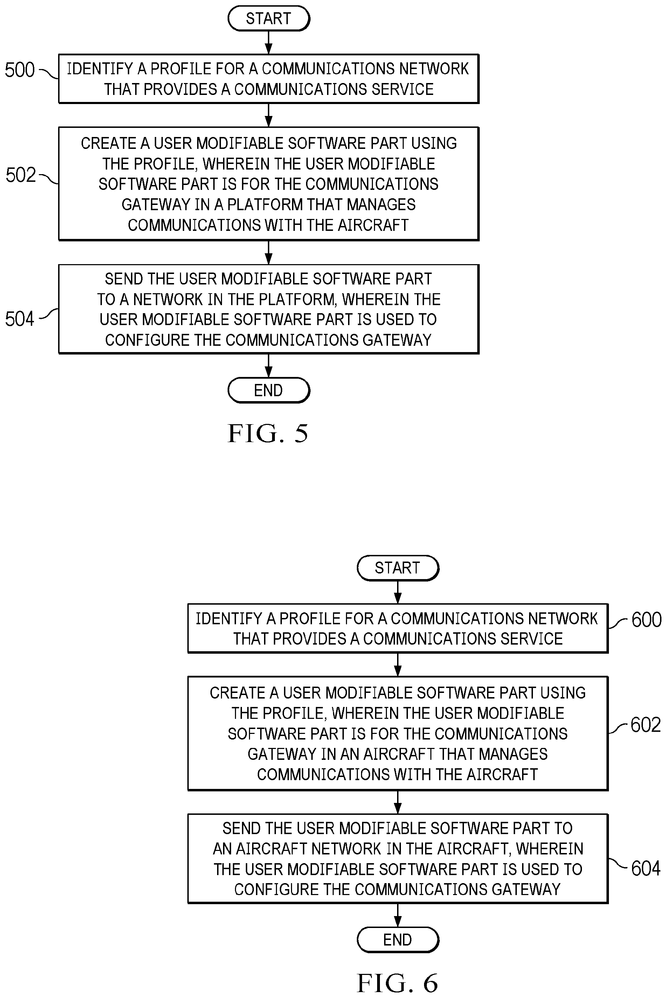

Turning next to **Figure 5****,** an example illustration of a flowchart of a process for configuring a communications gateway is depicted in accordance with an illustrative embodiment. The process in **Figure 5** can be implemented in hardware, software, or both. When implemented in software, the process can take the form of program instructions that are run by one of more processor units located in one or more hardware devices in one or more computer systems. For example, the process can be implemented in configuration manager **214** in computer system **212** in **Figure 2****.**

The process identifies a profile for a communications network that provides a communications service (operation **500).** The process creates a user modifiable software part using the profile, wherein the user modifiable software part is for the communications gateway in a platform that manages communications with the aircraft (operation **502).**

The process sends the user modifiable software part to a network in the platform, wherein the user modifiable software part is used to configure the communications gateway (operation **504).** The process terminates thereafter.

Turning next to **Figure 6****,** an example illustration of a flowchart of a process for configuring a communications gateway in an aircraft is depicted in accordance with an illustrative embodiment. The process in **Figure 6** can be implemented in hardware, software, or both. When implemented in software, the process can take the form of program instructions that are run by one of more processor units located in one or more hardware devices in one or more computer systems. For example, the process can be implemented in configuration manager **214** in computer system **212** in **Figure 2****.**

The process identifies a profile for a communications network that provides a communications service (operation **600).** In operation **600,** the communications network can be selected from a group comprising a mobile network that provides cellular service and a satellite communications network. The communications gateway can be selected from a group comprising an aircraft interface device, a cellular modem, a satellite modem, an inflight entertainment server, and other suitable components that can be implemented as a gateway.

The process creates a user modifiable software part using the profile, wherein the user modifiable software part is for the communications gateway in an aircraft that manages communications with the aircraft (operation **602).**

The process sends the user modifiable software part to an aircraft network in the aircraft, wherein the user modifiable software part is used to configure the communications gateway (operation **604).** The process terminates thereafter.

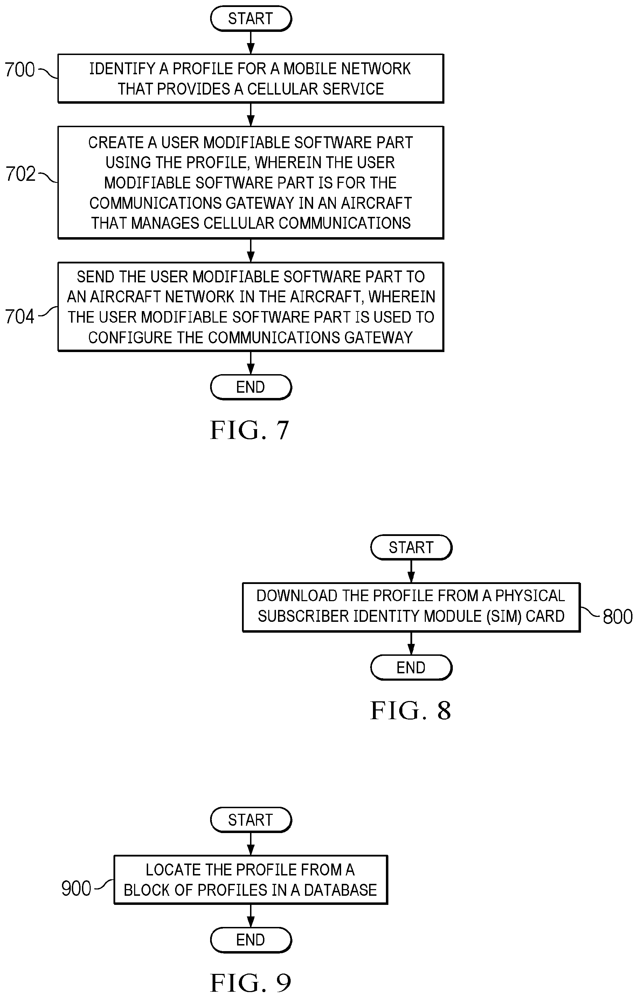

Turning to **Figure 7****,** an example illustration of a flowchart of a process for configuring a communications gateway in an aircraft is depicted in accordance with an illustrative embodiment. The process in **Figure 7** can be implemented in hardware, software, or both. When implemented in software, the process can take the form of program instructions that are run by one of more processor units located in one or more hardware devices in one or more computer systems. For example, the process can be implemented in configuration manager **214** in computer system **212 in** **Figure 2****.**

The process identifies a profile for a mobile network that provides a cellular service (operation **700).** The process creates a user modifiable software part using the profile, wherein the user modifiable software part is for the communications gateway in an aircraft that manages cellular communications (operation **702).**

The process sends the user modifiable software part to an aircraft network in the aircraft, wherein the user modifiable software part is used to configure the communications gateway (operation **704).** The process terminates thereafter.

With reference now to **Figure 8****,** an example illustration of a flowchart of a process for identifying a profile is depicted in accordance with an illustrative embodiment. The process in this flowchart is an example of an implementation for operation **700** in **Figure 7****.** Alternatively, in cases where the mobile network is the communication network, and the cellular service is the communications service, the process in this flowchart may be an example of an implementation for operations **600** and **500 in** **Figure 6** and **Figure 5** respectively.

The process downloads the profile from a physical subscriber identity module (SIM) card (operation **800).** This process terminates thereafter.

Turning to **Figure 9****,** an example illustration of a flowchart of a process for identifying a profile is depicted in accordance with an illustrative embodiment. The process in this flowchart is an example of an implementation for operation **700** in **Figure 7****.** Alternatively, in cases where the mobile network is the communication network, and the cellular service is the communications service, the process in this flowchart may be an example of an implementation for operations **600** and **500** in **Figure 6** and **Figure 5** respectively.

The process locates the profile from a block of profiles in a database (operation **900).** The process terminates thereafter.

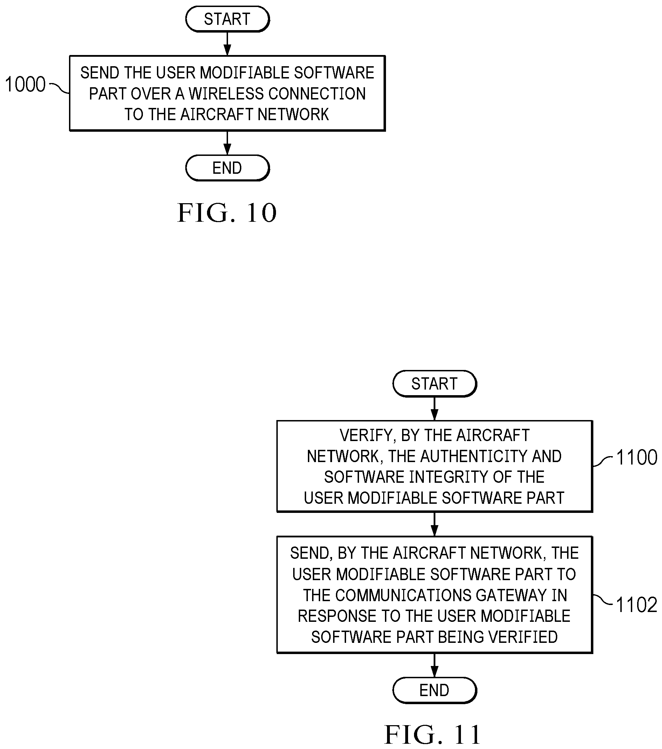

In **Figure 10****,** an example illustration of a flowchart of a process for sending a user modifiable software part is depicted in accordance with an illustrative embodiment. The process in this flowchart is an example of an implementation for operation **704** in **Figure 7****.** Alternatively, in cases where the mobile network is the communication network, and the cellular service is the communications service, the process in this flowchart may be an example of an implementation for operations **604** and **504** in **Figure 6** and **Figure 5** respectively.

The process sends the user modifiable software part over a wireless connection to the aircraft network (operation **1000).** The process terminates thereafter. In operation **1000,** the user modifiable software part can be sent over the wireless connection to the aircraft network from a mobile computing device.

With reference now to **Figure 11****,** an example illustration of a flowchart of a process for verifying a user modifiable software part is depicted in accordance with an illustrative environment. The operations in this flowchart are additional operations that can be performed with the operations in **Figure 7****.** Alternatively, in cases where the mobile network is the communication network, and the cellular service is the communications service, the operations in this flowchart are additional operations that can be performed with the operations in **Figure 6** and **Figure 5** respectively. In this example, the operations can be performed by aircraft network **224 in** **Figure 2****.** In this example, the aircraft network can be selected from a group comprising an onboard network system and a core network. In another examples, the aircraft network can be selected from a group comprising an inflight entertainment network, and a connected cargo network.

The process verifies, by the aircraft network, the authenticity and software integrity of the user modifiable software part (operation **1100).** The process sends, by the aircraft network, the user modifiable software part to the communications gateway in response to the user modifiable software part being verified (operation **1102).** The process terminates thereafter.

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program instructions, hardware, or a combination of the program instructions and hardware. When implemented in hardware, the hardware can, for example, take the form of integrated circuits that are manufactured or configured to perform one or more operations in the flowcharts or block diagrams. When implemented as a combination of program instructions and hardware, the implementation may take the form of firmware. Each block in the flowcharts or the block diagrams can be implemented using special purpose hardware systems that perform the different operations or combinations of special purpose hardware and program instructions run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

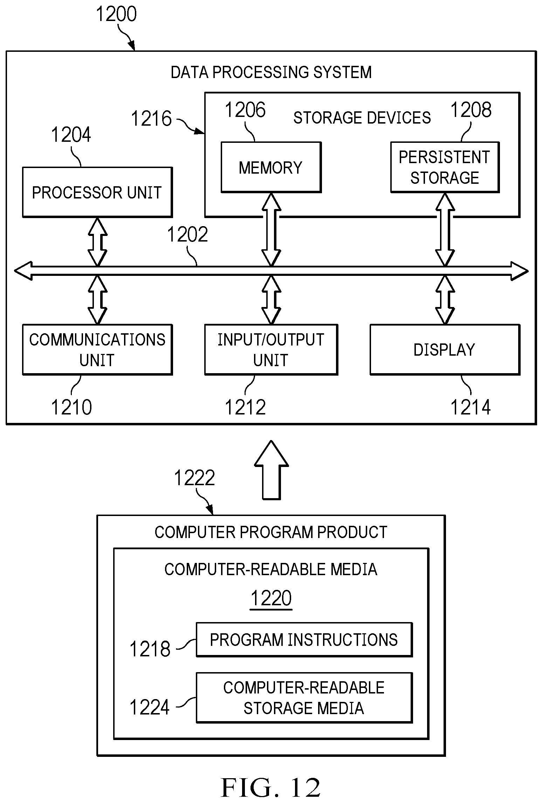

Turning now to **Figure 12****,** an example illustration of a block diagram of a data processing system is depicted in accordance with an illustrative embodiment. Data processing system **1200** can be used to implement computing devices in aircraft network **151** and communications gateway **102 in** **Figure 1****,** Data processing system **1200** can also be used to implement computer system **212,** computing devices in aircraft network **224,** and communications gateway **204** in **Figure 2****.** Further, data processing system **1200** can be used to implement laptop **402** and AID **407** in **Figure 3****.** In this illustrative example, data processing system **1200** includes communications framework **1202,** which provides communications between processor unit **1204,** memory **1206,** persistent storage **1208,** communications unit **1210,** input/output (I/O) unit **1212,** and display **1214.** In this example, communications framework **1202** takes the form of a bus system.

Processor unit **1204** serves to execute instructions for software that can be loaded into memory **1206.** Processor unit **1204** includes one or more processors. For example, processor unit **1204** can be selected from at least one of a multicore processor, a central processing unit (CPU), a graphics processing unit (GPU), a physics processing unit (PPU), a digital signal processor (DSP), a network processor, or some other suitable type of processor. Further, processor unit **1204** can be implemented using one or more heterogeneous processor systems in which a main processor is present with secondary processors on a single chip. As another illustrative example, processor unit **1204** can be a symmetric multi-processor system containing multiple processors of the same type on a single chip.

Memory **1206** and persistent storage **1208** are examples of storage devices **1216.** A storage device is any piece of hardware that is capable of storing information, such as, for example, without limitation, at least one of data, program instructions in functional form, or other suitable information either on a temporary basis, a permanent basis, or both on a temporary basis and a permanent basis. Storage devices **1216** may also be referred to as computer-readable storage devices in these illustrative examples. Memory **1206,** in these examples, can be, for example, a random-access memory or any other suitable volatile or nonvolatile storage device. Persistent storage **1208** may take various forms, depending on the particular implementation.

For example, persistent storage **1208** may contain one or more components or devices. For example, persistent storage **1208** can be a hard drive, a solid-state drive (SSD), a flash memory, a rewritable optical disk, a rewritable magnetic tape, or some combination of the above. The media used by persistent storage **1208** also can be removable. For example, a removable hard drive can be used for persistent storage **1208.**

Communications unit **1210,** in these illustrative examples, provides for communications with other data processing systems or devices. In these illustrative examples, communications unit **1210** is a network interface card.

Input/output unit **1212** allows for input and output of data with other devices that can be connected to data processing system **1200.** For example, input/output unit **1212** may provide a connection for user input through at least one of a keyboard, a mouse, or some other suitable input device. Further, input/output unit **1212** may send output to a printer. Display **1214** provides a mechanism to display information to a user.

Instructions for at least one of the operating system, applications, or programs can be located in storage devices **1216,** which are in communication with processor unit **1204** through communications framework **1202.** The processes of the different embodiments can be performed by processor unit **1204** using computer-implemented instructions, which may be located in a memory, such as memory **1206.**

These instructions are referred to as program instructions, computer usable program instructions, or computer-readable program instructions that can be read and executed by a processor in processor unit **1204.** The program instructions in the different embodiments can be embodied on different physical or computer-readable storage media, such as memory **1206** or persistent storage **1208.**

Program instructions **1218** are located in a functional form on computer-readable media **1220** that is selectively removable and can be loaded onto or transferred to data processing system **1200** for execution by processor unit **1204.** Program instructions **1218** and computer-readable media **1220** form computer program product **1222** in these illustrative examples. In the illustrative example, computer-readable media **1220** is computer-readable storage media **1224.**

Computer-readable storage media **1224** is a physical or tangible storage device used to store program instructions **1218** rather than a medium that propagates or transmits program instructions **1218.** Computer-readable storage media **1224** may be at least one of an electronic storage medium, a magnetic storage medium, an optical storage medium, an electromagnetic storage medium, a semiconductor storage medium, a mechanical storage medium, or other physical storage medium. Some known types of storage devices that include these mediums include: a diskette, a hard disk, a random access memory (RAM), a read-only memory (ROM), an erasable programmable read-only memory (EPROM or Flash memory), a static random access memory (SRAM), a compact disc read-only memory (CD-ROM), a digital versatile disk (DVD), a memory stick, a floppy disk, a mechanically encoded device, such as punch cards or pits / lands formed in a major surface of a disc, or any suitable combination thereof.

Computer-readable storage media **1224,** as that term is used in the present disclosure, is not to be construed as storage in the form of transitory signals per se, such as at least one of radio waves or other freely propagating electromagnetic waves, electromagnetic waves propagating through a waveguide, light pulses passing through a fiber optic cable, electrical signals communicated through a wire, or other transmission media.

Further, data can be moved at some occasional points in time during normal operations of a storage device. These normal operations include access, de-fragmentation or garbage collection. However, these operations do not render the storage device as transitory because the data is not transitory while the data is stored in the storage device.

Alternatively, program instructions **1218** can be transferred to data processing system **1200** using a computer-readable signal media. The computer-readable signal media are signals and can be, for example, a propagated data signal containing program instructions **1218.** For example, the computer-readable signal media can be at least one of an electromagnetic signal, an optical signal, or any other suitable type of signal. These signals can be transmitted over connections, such as wireless connections, optical fiber cable, coaxial cable, a wire, or any other suitable type of connection.

Further, as used herein, "computer-readable media **1220"** can be singular or plural. For example, program instructions **1218** can be located in computer-readable media **1220** in the form of a single storage device or system. In another example, program instructions **1218** can be located in computer-readable media **1220** that is distributed in multiple data processing systems. In other words, some instructions in program instructions **1218** can be located in one data processing system while other instructions in program instructions **1218** can be located in one data processing system. For example, a portion of program instructions **1218** can be located in computer-readable media **1220** in a server computer while another portion of program instructions **1218** can be located in computer-readable media **1220** located in a set of client computers.

The different components illustrated for data processing system **1200** are not meant to provide architectural limitations to the manner in which different embodiments can be implemented. In some illustrative examples, one or more of the components may be incorporated in or otherwise form a portion of, another component. For example, memory **1206,** or portions thereof, may be incorporated in processor unit **1204** in some illustrative examples. The different illustrative embodiments can be implemented in a data processing system including components in addition to or in place of those illustrated for data processing system **1200.** Other components shown in **Figure 12** can be varied from the illustrative examples shown. The different embodiments can be implemented using any hardware device or system capable of running program instructions **1218.**

Furthermore, following the examples described above, the disclosure may provide the following combination of features forming example embodiments that represent the alternatives within the scope of the presently claimed subject matter.

In some examples where the communications network **207** is the mobile network **209** and the communications service **221** is the cellular service **222,** a method for configuring a communications gateway **204** comprises: identifying a profile **220** for the mobile network **209** that provides the cellular service **222;** creating a user modifiable software part **223** using the profile **220,** wherein the user modifiable software part **223** is for the communications gateway **204** in an aircraft **206** that manages cellular communications; and sending the user modifiable software part **404** to an aircraft network **224** in the aircraft **206,** wherein the user modifiable software part **223** is used to configure the communications gateway **204.** In some examples, identifying the profile **220** comprises downloading the profile **220** from a physical subscriber identity module (SIM) card **232.** In some examples, identifying the profile **220** comprises locating the profile **220** from a block of profiles **230** in a database **231.** In some examples, sending the user modifiable software part **223** comprises sending the user modifiable software part **223** over a wireless connection to the aircraft network **224.**

In some examples, a computer program product **1222** for configuring a communications gateway **204,** the computer program product **1222** comprises: a set of one or more computer-readable storage media **1220;** and program instructions, collectively stored in the set of one or more storage media **1220,** for causing a number of processors to perform the following computer operations: identifying a profile **220** for a communications network **207** that provides a communications service **221;** creating a user modifiable software part **223** using the profile **220** for communications network, wherein the user modifiable software part **223** is for the communications gateway **204** in an aircraft **206** that manages communications with the aircraft **206;** and sending the user modifiable software part **223** to an aircraft network **224** in the aircraft **206,** wherein the user modifiable software part **223** is used to configure the communications gateway **204.**

In some examples where the communications network **207** is the mobile network **209** and the communications service **221** is the cellular service **222,** a computer program product **1222** for configuring a communications gateway **204** comprises: a set of one or more computer-readable storage media **1220;** and program instructions, collectively stored in the set of one or more storage media **1220,** for causing a number of processor units to perform the following computer operations: identifying a profile **220** for the mobile network **209** that provides the cellular service **222;** creating a user modifiable software part **223** using the profile **220,** wherein the user modifiable software part **223** is for the communications gateway **204** in an aircraft **206** that manages cellular communications; and sending the user modifiable software part **223** to an aircraft network **224** in the aircraft **206,** wherein the user modifiable software part **223** is used to configure the communications gateway **204.**

Thus, the illustrative examples provide a method, apparatus, system, and computer program product for configuring mutations gateways and platforms such as aircraft. In one illustrative example, a cellular communication configuration system comprising a computer system and a configuration manager in the computer system. The configuration manager is configured to identify a profile for a mobile network that provides a cellular service. The configuration manager is configured to create a user modifiable software part for the mobile network using the profile, wherein the user modifiable software part is for a communications gateway in an aircraft that manages cellular communications. The configuration manager is configured to send the user modifiable software part to an aircraft network in the aircraft. The user modifiable software part is used to configure the communications gateway.

As a result, communications gateways in hard-to-reach locations in different platforms such as aircraft can be more quickly and easily configured or reconfigured. In these different examples, the reconfiguration can enable accessing or using new or additional services from different communications networks with less effort and time as compared to current techniques for reconfiguration such as an aircraft. In the different illustrative examples, access to the communications gateway is unnecessary because the information needed to reconfigured the communications gateway is sent to a platform such as aircraft in the form of a modifiable software part. Within aircraft, the aircraft network receives as part, processes depart, and then sends the park to the communications gaping for use in any configuration reconfiguration to access the communications network.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A communications configuration system comprising:
a computer system (212); and
a configuration manager (214) in the computer system (212), wherein the configuration manager (214) is configured to:
identify a profile (220, 300) for a communications network (207) that provides a communications service (221);
create a user modifiable software part (223, 404) for the communications network (207) using the profile (220, 300), wherein the user modifiable software part (223, 404) is for a communications gateway (102, 204) in an aircraft (206) that manages communications with the aircraft (206); and
send the user modifiable software part (223, 404) to an aircraft network (151, 224) in the aircraft (206), wherein the user modifiable software part (223, 404) is used to configure the communications gateway (102, 204).

2. The communications configuration system of claim 1, wherein the communications network (207) is a mobile network (150, 209), and the communications service (221) is a cellular service (222).

3. The communications configuration system of claim 2, wherein in identifying the profile (220, 300), the configuration manager (214) is configured to:
download the profile (220, 300) from a physical subscriber identity module (SIM) card (232).

4. The communications configuration system of claim 2 or 3, wherein in identifying the profile (220, 300), the configuration manager (214) is configured to:
locate the profile (220, 300) from a block of profiles (230) in a database (231).

5. The communications configuration system of any one of claims 2 to 4, wherein in sending the user modifiable software part (223, 404), the configuration manager (214) is configured to:
send the user modifiable software part (223, 404) over a wireless connection to the aircraft network (151, 224) .

6. The communications configuration system of claim 5, wherein the user modifiable software part (223, 404) is sent over the wireless connection to the aircraft network (151, 224) from a mobile computing device.

7. The communications configuration system of any one of claims 1 to 6, wherein the aircraft network (151, 224) is configured to verify authenticity and software integrity of the user modifiable software part (223, 404) and sends the user modifiable software part (223, 404) to the communications gateway (102, 204) in response to the user modifiable software part (223, 404) being verified.

8. The communications configuration system of any one of claims 1 to 7, wherein the profile (220, 300) comprises an access point network identifier (302) for the communications network (150, 209, 207) and credentials to authenticate the communications network (150, 209, 207), wherein the aircraft network (151, 224) sends the user modifiable software part (223, 404) to the communications gateway (102, 204).

9. The communications configuration system of any one of claims 1 to 8, wherein the computer system (212) is selected from at least one of a laptop computer, an electronic flight bag, a tablet computer, or a mobile phone.

10. The communications configuration system of any one of claims 1 to 9, wherein the aircraft network (151, 224) is selected from a group comprising an onboard network system, a core network, an inflight entertainment network, and a connected cargo network.

11. The communications configuration system of any one of claims 1 to 10, wherein the user modifiable software part (223, 404) has a design assurance level that is DAL **E.**

12. The communications configuration system of any one of claims 1 to 11, wherein the communications gateway (102, 204) is selected from a group comprising an aircraft interface device, a cellular modem, a satellite modem, and an inflight entertainment server.

13. The communications configuration system of any one of claims 1 to 12, wherein the communications network (207) is a mobile network (150, 209) that is selected from a group comprising a 5G network, a Long-Term Evolution (LTE) network, a Universal Mobile Telecommunications System (UTMS) network, and a Global System for Mobile Communications (GSM) network.

14. The cellular communication configuration system of any one of claims 1 to 13, wherein the communications gateway (102, 204) is configured to manage connections with a mobile network (150, 209) and a satellite communications network.

15. A method for configuring a communications gateway (102, 204), the method comprising:
identifying a profile (220, 300) for a communications network (207) that provides a communications service (221);
creating a user modifiable software part (223, 404) using the profile (220, 300), wherein the user modifiable software part (223, 404) is for the communications gateway (102, 204) in an aircraft (206) that manages communications with the aircraft (206); and
sending the user modifiable software part (223, 404) to an aircraft network (151, 224) in the aircraft (206), wherein the user modifiable software part (223, 404) is used to configure the communications gateway (102, 204).
